# EUROPEAN PATENT APPLICATION

(11) **EP 1 936 481 A1**
(43) Date of publication of application: **25.06.2008**
(21) Application number: 06026729.1
(22) Date of filing: 22.12.2006
(51) Int. Cl.: G06F 3/048

(54) **Menu in a user interface**

(71) Applicant: Xelion B.V., 2612 KK Delft (NL)
(72) Inventor: Cohen, Michael, 2585 TM The Hague (NL)
(74) Representative: Land, Addick Adrianus Gosling

(57) **Abstract**

Method for selecting a menu item from a menu on a screen, comprising of:
a user activating selection from the menu by means of an input member which communicates with a processor unit which further communicates with the screen;
showing the menu on the screen if the menu is not already being shown on the screen;
selecting a predetermined menu item from the menu;
indicating on the screen the predetermined menu item in the menu;
selecting a subsequent menu item from the menu by moving a pointer a relatively small distance outside the area on the screen covered by the menu, wherein the distance over which the pointer has moved is shorter than the distance between the selected menu item and the menu item to be selected;
indicating the selected menu item on the screen;
executing at least one command associated with the selected menu item after operating an input member.

## Description

The present invention relates to the method for selecting a menu item from a menu on a screen.

The present invention also relates to a device for performing such a method.

The present invention further relates to software for performing such a method by means of a computer.

The present invention also relates to a data carrier comprising a computer program which, when executed by means of a processing unit, can perform such a method.

Prior art user interfaces display menus which show a number of menu items depending on the object to which the menu relates. Different objects therefore show different menu items in their menu. In order to show such a menu in the prior art user interfaces a pointer is placed above the object, for instance a link, internet link or a desktop icon. The menu is then shown by clicking with for instance a mouse button. A menu item can now be selected from the menu by moving the pointer to the desired menu item and clicking on this menu item, for instance with the left-hand mouse button.

If a user uses many menus with many menu items and has to open these menus frequently and select a menu item therefrom, the user then makes a large number of movements with the mouse. As is known, intensive use of mouse and keyboard can result in Repetitive Strain Injury (RSI). The prior art user interfaces have the drawback of contributing toward the development of RSI in users who have to make many and regular mouse movements.

An object of the present invention is to reduce the chance of RSI symptoms developing or being aggravated.

This object is realized by the present invention in that it provides a method for selecting a menu item from a menu on a screen, comprising of: a user activating selection from the menu by means of an input member which communicates with a processor unit which further communicates with the screen; showing the menu on the screen if the menu is not already being shown on the screen; selecting a predetermined menu item from the menu; indicating on the screen the predetermined menu item in the menu; selecting a subsequent menu item from the menu by moving a pointer a relatively small distance outside the area on the screen covered by the menu, wherein the distance over which the pointer has moved is shorter than the distance between the selected menu item and the menu item to be selected; indicating the selected menu item on the screen; executing at least one command associated with the selected menu item after operating an input member.

The movement with the pointer necessary to select the desired menu item from the menu is reduced compared to the prior art because the pointer need hardly be moved in order to make a selection in the menu, even if the last menu item is selected from the menu. This is made possible in that the sensitivity of the menu item selection to movements of for instance a mouse is greater than the sensitivity of the displacement of the pointer to the same movements of this mouse, and it is not necessary to move over the distance between the pointer and the area covered by the menu.

The invention further provides a method wherein during the selection of a subsequent menu item the pointer is situated outside the area covered by the menu. The invention further provides a method wherein the pointer is moved a relatively small distance outside the area covered by the menu for the purpose of selecting a subsequent menu item.

The invention further provides a method wherein showing the menu entails showing menu items oriented vertically relative to each other. The invention also provides a method wherein showing the menu entails showing menu items oriented horizontally relative to each other.

The present invention further provides a method wherein showing the menu entails showing a part of the menu and wherein, when a menu item is selected during movement of the pointer, menu items selectable on a first side of the menu disappear and wherein menu items selectable on a second side appear on the screen.

In this way the menu makes use of only a limited part of the screen, while it is still possible to include a large number of menu items in the menu.

The present invention further provides a method wherein at least one menu item of the menu comprises a submenu, wherein the submenu comprises submenu items, and wherein selection of a menu item is linked to the movement of the pointer in a first direction and selection of a submenu item is linked to a second direction.

The invention also provides a method wherein showing a menu entails showing only the selected menu item. The non-selected menu items are not shown. In an alternative embodiment the menu item comprises an icon.

The present invention further provides in very advantageous manner a method wherein activating of the selection from the menu comprises of: the user displacing the pointer to a position above an object to which a menu is linked; waiting for a predetermined period of time while the pointer is situated substantially immobile above the object before the menu is shown on the screen.

This measure is very advantageous when activating of the selection takes place by placing the pointer above an object, and prevents the menu appearing immediately as soon as the pointer is moved over the object from elsewhere, and the menu items being selected at high speed one after another as if the selection is "racing" through the menu. A predetermined menu item, the "default option", will hereby be selected immediately after the appearance of the menu, so that this default is automatically chosen as soon as the user performs a selection operation, such as operating a button, without waiting for the menu to appear. Without this measure the user would see the menu items selected at high speed between the moment the pointer begins to move over the object and the moment the button is operated, whereafter a "random" menu item is chosen as soon as the user operates the button.

In addition to performing activation of the selection from the menu by placing the pointer above the object, in an alternative embodiment the activating of the selection comprises of operating a button. In one embodiment the button forms part of a keyboard. In another embodiment the button is a mouse button. In another alternative embodiment the selection is activated by auditory input, such as a voice command.

The invention further provides a method wherein the sensitivity of the pointer for selection in the menu is adjustable. This sensitivity is furthermore adjustable separately of the pointer sensitivity which is set in the user interface and which is effective if no menu is opened.

In an embodiment of the present invention a device is provided comprising a processing unit, a memory and a screen adapted to perform a method as described above.

In another embodiment the invention provides software for performing a method as described above by means of a computer.

In yet another embodiment a data carrier is provided comprising a computer program which can perform a method as described above when executed by means of a processing unit.

Further embodiments and examples will become apparent with reference to the description and the accompanying figures, in which:
Figure 1A shows a schematic representation of an object which is visible on a screen and for which a menu according to the present invention is displayed;
Figure 1B shows a schematic representation of the object and the menu of figure 1A, wherein a second menu item is selected;
Figure 1C shows a schematic representation of the object and the menu of figures 1A and 1B, wherein the last menu item is selected;
Figure 2A shows a schematic representation of an alternative embodiment of the object and the menu according to the present invention, wherein a second menu item is selected;
Figure 2B shows a schematic representation of the object and the menu of figure 2A, wherein the third menu item is selected;
Figure 3A shows a schematic representation of an alternative embodiment of the object and the menu according to the present invention, wherein the second menu item, shown as the middle menu item, is selected;
Figure 3B shows a schematic representation of the object and the menu of figure 3A, wherein the third menu item, shown as the middle menu item, is selected, the first menu item on the left has disappeared and a fourth menu item has appeared on the right;
Figure 4A shows a schematic representation of an alternative embodiment of the object and the menu according to the present invention, wherein a third menu item is selected;
Figure 4B shows a schematic representation of the object and the menu of figure 4A, wherein a submenu item is selected from the first menu;
Figure 5A shows a schematic representation of an alternative embodiment of an object and a menu according to the present invention, wherein a first function is selected;
Figure 5B shows a schematic representation of the object and the menu of figure 5A, wherein a second function is selected;
Figure 5C shows a schematic representation of the object and the menu of figure 5B, wherein a third function is selected;
Figure 6 shows a flow diagram of a method according to the present invention;
Figure 7 shows an application window with a menu bar, wherein a menu item is chosen by applying a method according to the present invention.

The same reference numerals designate the same components in all the figures.

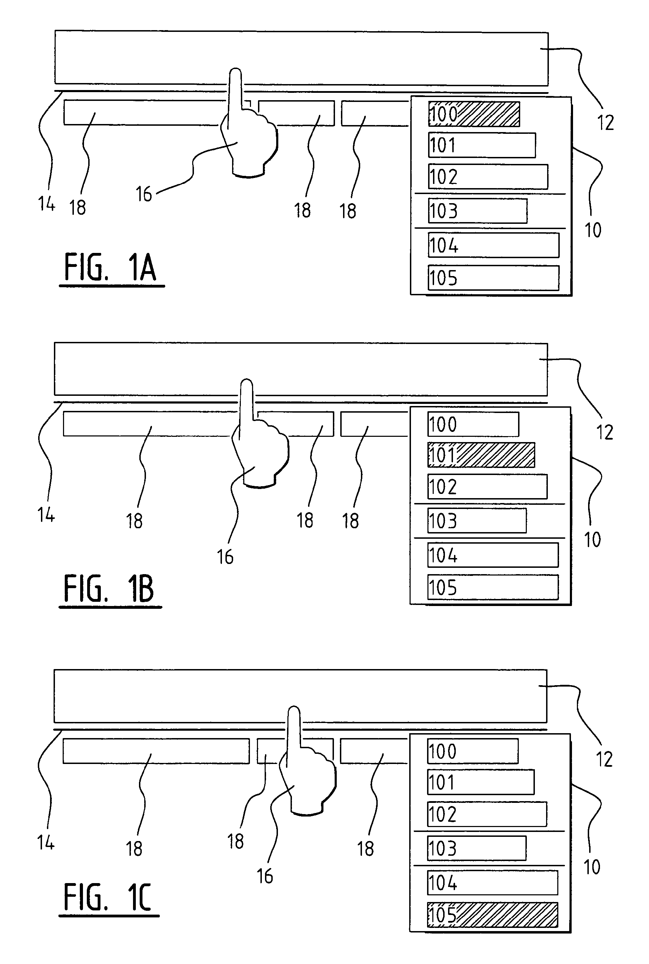

Figure 1 shows an object 12 displayed by a user interface on a screen of a computer. Object 12 can appear in diverse forms, such as a desktop icon, a file icon in a file management program, a database record in a database, a link in an internet browser and the like. In this specific embodiment object 12 is underlined with a line 14 in order to indicate that object 12 is a link. A menu 10 linked to object 12 shows a number of menu items 100-105, wherein the first menu item 100 is selected (indicated by hatching). A pointer 16 is poised "above" object 12. Finally, the screen shows other objects 18 which optionally have a linked menu.

During normal use a menu 10 is not shown, so that all object 12, 18 are visible. When pointer 16 is placed above object 12 using a mouse and held substantially still there for a short time, for instance 250 ms, menu 10 is then shown. Menu 10 is therefore shown automatically without the user having to operate a button, such as for instance a right-hand mouse button. Menu 10 shows six menu items 100-105, wherein menu item 100 is already preselected and designated. When the user now chooses the selected menu item 100, for instance by operating a mouse button or pressing the "enter" key, the command associated with menu item 100 is then executed without the mouse pointer necessarily being situated above menu 10. If the user already operates the mouse button before menu 10 is shown, the command associated with the preselected but not yet shown menu item is then also executed. The standard left click with the mouse in this way continues to operate in the same manner as that to which users are accustomed in most graphic operating systems.

In order to select a subsequent menu item 100-105 in menu 10 the user moves pointer 16 a short distance, for instance to the right, using the mouse (figure 1B). (In all figures the displacement of the mouse pointer is exaggerated so that it is clearly apparent in the figures that there is a displacement). With any slight movement to the right, for instance of only a few pixels, a subsequent menu item 100-105 is selected. If the desired menu item 100-105 is selected, the operation associated with the selected menu item 100-105 is executed by the user operating a button. In order to select for instance the last menu item 105, the user need not displace pointer 16 all the way from the original position in figure 1A to the position of the last menu item. It suffices to displace pointer 16 a relatively small distance to the right as shown in figure 1C.

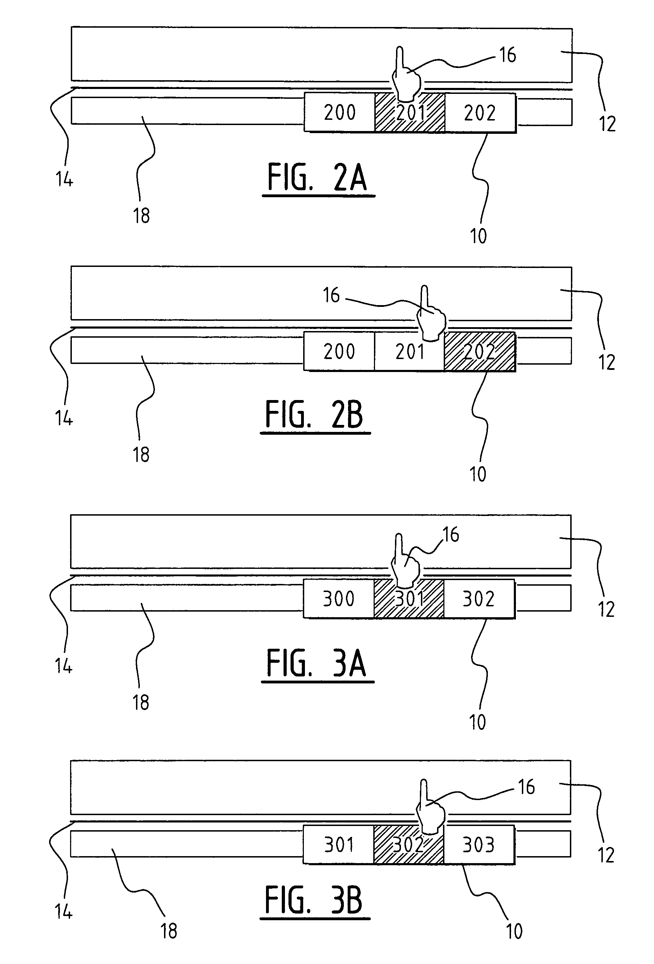

Figure 2A shows an alternative embodiment wherein an object 12 is displayed on the screen, for instance an internet link, which is being represented by the link being underlined with a line 14. A menu 10 shows three menu items 200-202 which are oriented horizontally in contrast to the more conventional vertical orientation of menu items 100-105 of figures 1A-1C. The selection of menu item 201 in menu 10 is indicated by means of hatching. If mouse pointer 16 is moved a small distance (figure 2B) a subsequent menu item 202 is selected, this being shown by the hatching which has jumped to menu item 202. A respective horizontal or vertical orientation of menu items 100-105 or 200-202 does not otherwise necessarily have to be linked to a respective horizontal or vertical movement of pointer 16, but any direction is possible. It is however recommended that the orientation corresponds to the direction of the movement of pointer 16, since this works more intuitively for the user. In an embodiment in which menu 10 is shown only as long as mouse pointer 16 is located above an object 12 to which menu 10 is linked, it is recommended not to have the direction of movement of pointer 16 correspond to the orientation of menu 10 if the dimension of object 12 in the direction of the orientation of menu 10 does not allow sufficient space for movement of pointer 16 to enable selection of all menu items, while the dimension of object 12 in the direction transversely of this direction does allow this space for movement.

Figure 3A shows an alternative embodiment in which a menu 10 shows only a part (300-302) of the selectable menu items. The selected menu item 301 is indicated by hatching. If the mouse is moved a small distance, in this embodiment it is not the hatching which will jump to the adjacent menu item 302, but the menu items will each shift along one position, wherein on the left-hand side the menu item 300 furthest to the left disappears and is replaced by menu item 301, the selected menu item 301 is replaced by the newly selected menu item 302, and a new menu item 303 appears on the right-hand side (figure 3B). In this way a menu which can comprise a large number of menu items is shown on a relatively small part of the screen.

In an embodiment which is not shown the selection of subsequent menu items is, in contrast to the above stated embodiments, not done by further displacing pointer 16 a small distance at a time, but a process of successive selection of subsequent menu items is started by displacing the pointer once-only over a short distance and then holding it still again. The menu items are now selected successively, wherein there is a delay between the successive selections in order to prevent the process proceeding so quickly that the user cannot respond in time. This process can be stopped again by once again displacing pointer 16 a short distance, preferably in an opposite direction. The command associated with the selected menu item is executed by operating a button, for instance the left-hand mouse button. In an alternative embodiment it is not necessary to explicitly stop the successive selection, but a button is operated during the successive selection in order to execute the command associated with the menu item selected at that moment.

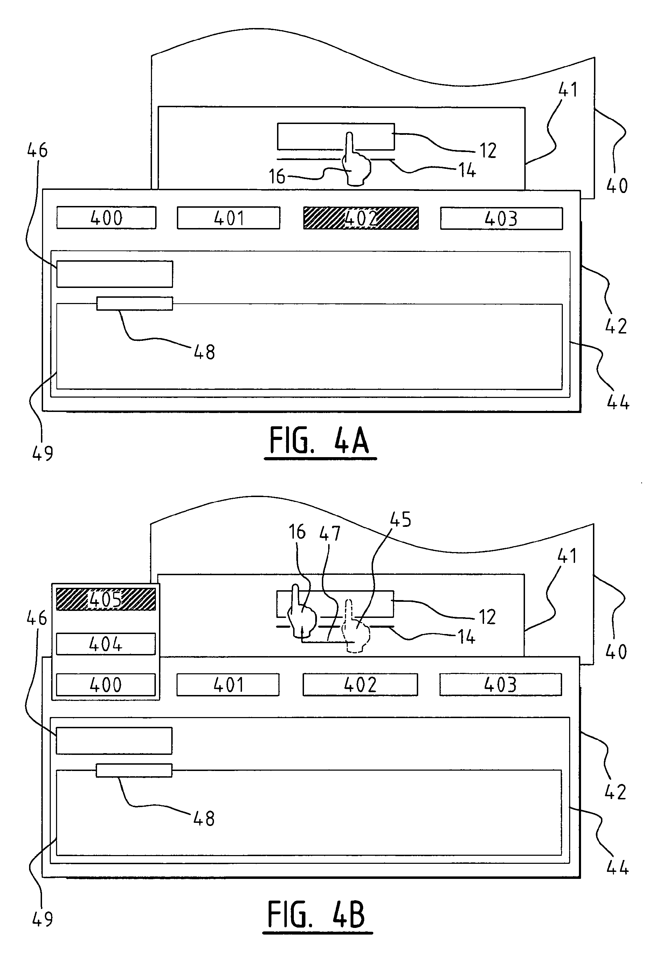

Figure 4A shows an alternative embodiment in which a window 40 comprises a list 41 of links 12. When pointer 16 is moved over link 12, there then appears a window 42 with four menu items 400-403. A default menu item 402 is selected and information associated with link 12 is shown in a frame 44, wherein a heading 46 shows the selected link 12, a subheading 48 and frame 49 comprise further information relating to link 12. A menu item 400-403 is selected by moving pointer 16 a short distance horizontally. At least one of the menu items 400-403 is itself also a (sub)-menu in turn comprising submenu items 404-405. A submenu item 404, 405 is selected by moving pointer 16 a short distance vertically under a menu item 400-403.

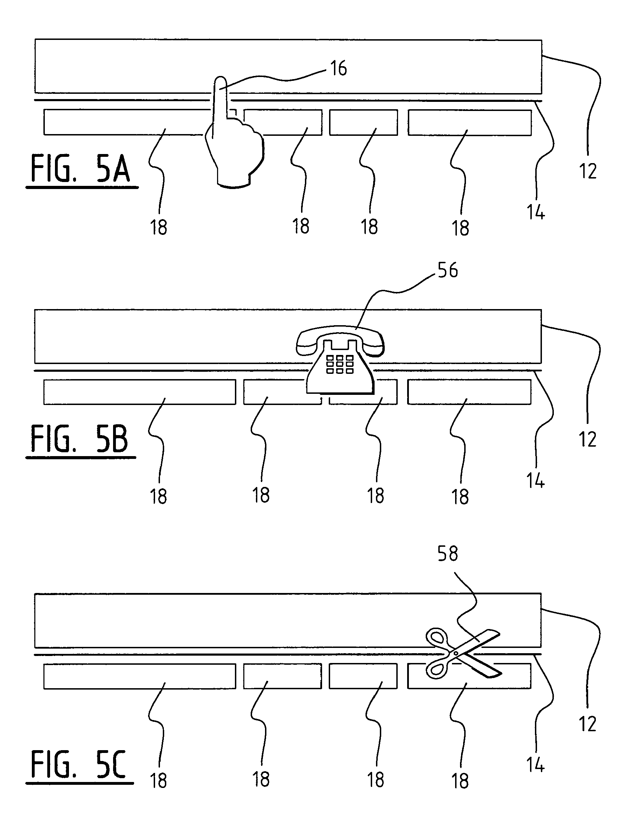

When in an alternative embodiment pointer 16 is moved over an object 12 (figure 5A), a full menu is not then opened. If the user clicks on object 12, in this embodiment for instance a link, the default operation is then executed. In the case of a link this is then following the link. However, by clicking only after pointer 16 has been displaced a short distance, instead of a subsequent menu item being selected in a menu the form of pointer 16 is modified to the operation of the subsequent menu item. In this exemplary embodiment the link is a link to contact data of a person. The predetermined command is to follow the link, whereafter the contact data of the person are shown. The operation associated with the second menu item is to call the person. Figure 5B shows that pointer 16 has acquired the form of a telephone 56 so as to indicate that the second menu item, calling the person, has been selected. By now clicking with the left-hand mouse button the person referred to in link 12 is actually called. If pointer 16 is displaced a little further still from the situation of figure 5B, pointer 56 then takes on a following form 58 (figure 5C) so as to indicate that a third menu item has been selected. Form 58 indicates that the command associated with the third menu item is cutting of the object, wherein the object is placed on the clipboard.

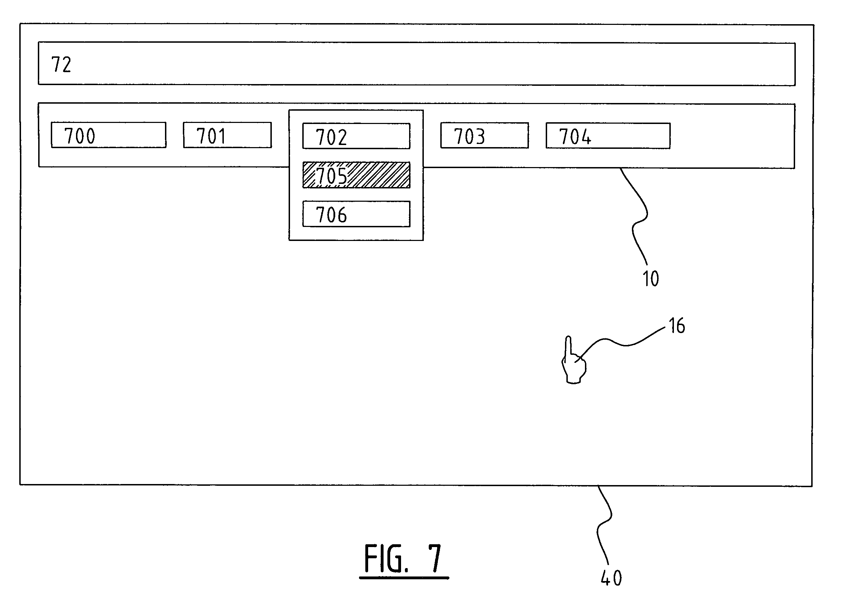

Figure 7 shows a window 40 in which a window title 72 and a menu bar 10 are shown. Irrespective of the position of pointer 16 the user activates selection from menu bar 10 by operating a button. By now moving pointer 16 a small distance horizontally menu items 700-704 are selected one by one. If pointer 16 is moved vertically, a submenu item 705, 706 is selected from a submenu 700-704. Not all menu items need be submenus. The selection from a submenu 702 is made by moving pointer 16 a small distance vertically. Through operation of a button a command associated with the selected menu item or submenu item is executed.

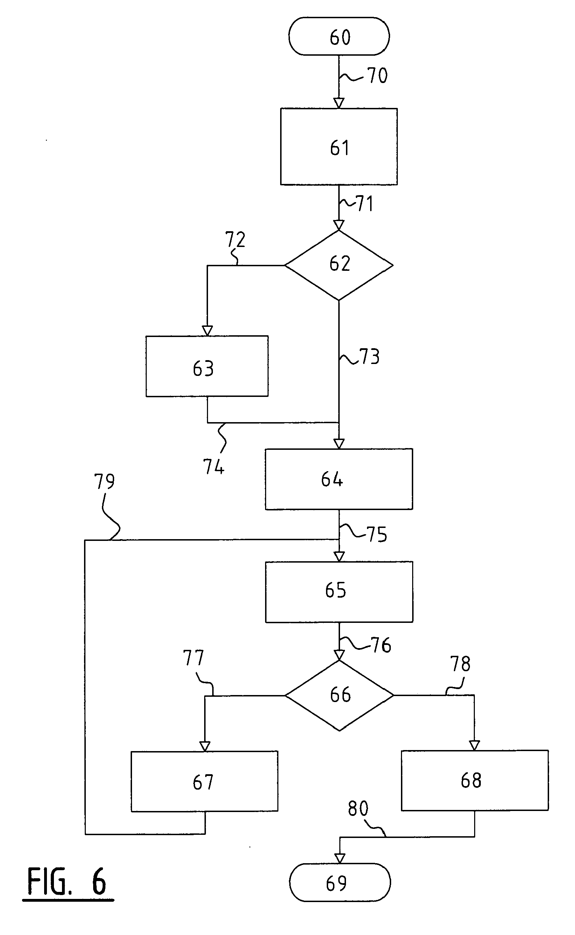

A method according to the invention (figure 6) begins at the start 60. Step 61 comprises of waiting for an event activating selection from a menu 10, such as mouse pointer 16 being placed above an object 12 or the user pressing a button. After selection has been activated, a check is made 62 whether menu 10 is already being shown. This is the case for instance if there is a menu bar of an application which is shown permanently in the window of the application. If menu 10 is not already being shown, branch 72 is followed from decision 62, whereafter menu 10 is shown 63 on the screen. Once menu 10 is shown on the screen (branch 74, or branch 73 if menu 10 was already being shown), a predetermined menu item is selected and indicated on screen 64. Once the standard menu item has been selected and indicated, step 65 comprises of waiting for user activity. In this specific case step 65 comprises of waiting on the one hand for a movement of pointer 16 (branch 77) or on the other hand for a select action of the user 78, for instance clicking with the left-hand mouse button. If a user activity is detected, an assessment is then made 66 of what type of user activity this is. If pointer 16 is moved, a subsequent menu item is then selected and indicated 67 on the screen. Step 65 then comprises of once again waiting (branch 79) for user activity. If the detected user activity was however a select action, the command associated with the selected menu item is then executed 68. The selection ends 69 with the execution of the command.

The present invention is not limited to the above described embodiments thereof. The protection sought is defined by the following claims, within the scope of which many modifications and variations are possible.

## Claims

1. Method for selecting a menu item (100-105, 200-202, 300-303, 400-405) from a menu (10) on a screen, comprising of:
a user activating selection from the menu (10) by means of an input member which communicates with a processor unit which further communicates with the screen;
showing the menu (10) on the screen if the menu (10) is not already being shown on the screen;
selecting a predetermined menu item from the menu (10);
indicating on the screen the predetermined menu item in the menu (10);
selecting a subsequent menu item from the menu (10) by moving a pointer (16) a relatively small distance outside the area on the screen covered by the menu (10), wherein the distance over which the pointer (16) has moved is shorter than the distance between the selected menu item and the menu item to be selected;
indicating the selected menu item on the screen;
executing at least one command associated with the selected menu item after operating an input member.

2. Method as claimed in claim 1, wherein during the selection of a subsequent menu item the pointer (16) is situated outside the area covered by the menu.

3. Method as claimed in claim 1 or 2, wherein the pointer (16) is moved a relatively small distance outside the area covered by the menu for the purpose of selecting a subsequent menu item.

4. Method as claimed in claim 1, 2 or 3, wherein showing the menu (10) entails showing menu items oriented vertically relative to each other.

5. Method as claimed in claim 1, 2 or 3, wherein showing the menu (10) entails showing menu items oriented horizontally relative to each other.

6. Method as claimed in any of the claims 1-5, wherein showing the menu (10) entails showing a part of the menu (10) and wherein, when a menu item is selected during movement of the pointer (16), menu items selectable on a first side of the menu (10) disappear and wherein menu items selectable on a second side appear on the screen.

7. Method as claimed in any of the claims 1-6, wherein at least one menu item of the menu (10) comprises a submenu, wherein the submenu comprises submenu items, and wherein selection of a menu item is linked to the movement of the pointer (16) in a first direction and selection of a submenu item is linked to a second direction.

8. Method as claimed in any of the claims 1-3 or 7, wherein showing a menu (10) entails showing only the selected menu item.

9. Method as claimed in any of the claims 1-8, wherein activating of the selection from the menu (10) comprises of:
the user displacing the pointer (16) to a position above an object (12) to which a menu (10) is linked;
waiting for a predetermined period of time while the pointer (16) is situated substantially immobile above the object (12) before the menu (10) is shown on the screen.

10. Method as claimed in any of the claims 1-9, wherein the sensitivity of the pointer (16) for selection in the menu (10) is adjustable.

11. Device comprising a processing unit, a memory and a screen adapted to perform a method as claimed in claims 1-10.

12. Software for performing a method as claimed in one or more of the claims 1-10 by means of a computer.

13. Data carrier comprising a computer program which can perform a method as claimed in one or more of the claims 1-10 when executed by means of a processing unit.
